**Europäisches Patentamt**

**European Patent Office**

**Office européen des brevets**

(19)

(11) Veröffentlichungsnummer: **0 023 973**

**A1**

(12) # EUROPÄISCHE PATENTANMELDUNG

(21) Anmeldenummer: **80104005.6**

(22) Anmeldetag: **11.07.80**

(51) Int. Cl.³: **C 08 G 18/79**
**C 08 G 18/10, C 08 G 18/14**

(30) Priorität: **19.07.79 DE 2929129**

(43) Veröffentlichungstag der Anmeldung:
**18.02.81 Patentblatt 81/7**

(84) Benannte Vertragsstaaten:
**AT BE CH DE FR GB IT LI NL SE**

(71) Anmelder: **durol GmbH & Co. KG. Chemische Fabrik Lindau-Bodensee**
**Bregenzer Strasse 107**
**D-8990 Lindau - Bodensee(DE)**

(72) Erfinder: **Müller, Dieter**
**Erlenweg 3**
**D-7990 Friedrichshafen(DE)**

(74) Vertreter: **Engelhardt, Guido**
**Ehlersstrasse 17**
**D-7990 Friedrichshafen1(DE)**

(54) **Verfahren und Mischung zur Herstellung eines Polyisocyanurat-Schaumes.**

(57) Bei einem Verfahren zur Herstellung eines PIR-Schaumes wird einem aus Polyol und Isocyanat gebildeten Präpolymer ein Treibmittel zugegeben, das einen Trimerisierungskatalysator enthält. Das Polyol und das Isocyanat sind hierbei in dem Präpolymer in einem molaren Verhältnis von 1:3 und mehr miteinander gemischt. Ausserdem ist es angebracht, einen im Treibmittel lösbaren Katalysator zu verwenden und das Präpolymer mit einem Schaumstabilisator, einem Flammschutzmittel und/oder ähnl. Zusätzen zu versehen.

Auf diese Weise ist es möglich, ohne maschinellen Aufwand in wirtschaftlicher Weise einen PIR-Schaum nahezu überall zu erzeugen, der ausserdem dem jeweiligen Verwendungszweck leicht anzupassen ist. Dem aus Polyol und Isocyanat gebildeten Präpolymer, das in einem Vorratsbehälter gelagert wird, wird nämlich zum Aufschäumen in einer statischen oder dynamischen Mischvorrichtung lediglich ein Treibmittel, das den Trimerisierungskatalysator enthält und ebenfalls vorgemischt ist, in veränderbarer Menge beigegeben. Für den Verarbeiter sind somit keine Geräte zur Dosierung erforderlich, vielmehr können die das Präpolymer sowie das Treibmittel mit Katalysator enthaltende Behältnisse unmittelbar an eine Spritzpistole angeschlossen werden.

Durch die Zuführung des Treibmittels in der Mischvorrichtung tritt aus dieser im Volumen fertiger Schaum aus, der in einer Zeit von beispielsweise 5 bis 20 Minuten aushärtet.

Mittels des Trimerisierungskatalysators ist dessen Start-und Steigzeit beeinflussbar. Und um während des Ausschäumens einen preiswerten PIR-Schaum mit einer hohen Wärmedämmung und somit einem geringem Raumgewicht von z.B. 25 kg/m³ zu erzeugen, ist dem Präpolymer lediglich eine entsprechend grosse Menge Treibmittel zuzuführen. Bei der Herstellung eines schweren Schaumes als Konstruktionswerkstoff, der zur Befestigung von Bauteilen verwendet werden kann, ist dagegen der zuzuführende Treibmittelanteil z.B. mit Hilfe einer Spritzpistole zu reduzieren, so dass das Raumgewicht bis zu 60 kg pro/m³ erhöht wird.

Firma
durol GmbH & Co KG

Chemische Fabrik Lindau-Bodensee

8990 Lindau/Bodensee

0023973

*BEZEICHNUNG GEÄNDERT siehe Titelseite*

### Verfahren zur Herstellung eines PIR-Schaumes

Bisher werden PIR-Schäume aus zwei getrennt voneinander gelagerten Komponenten hergestellt, die in einem bestimmten Mischungsverhältnis zusammengebracht werden und denen ein Treibmittel zugeführt wird. Dazu werden Polyol, das meist mit Zusätzen wie Flammschutzmittel, Schaumstabilisatoren u. dgl. versehen ist, und Isocyanat verwendet. Der zum Vermischen der Komponenten erforderliche apparative Aufwand ist hierbei erheblich, da das Mischungsverhältnis, um einen PIR-Schaum zu erhalten, exakt einzuhalten ist, so dass besondere aufwendige Dosiereinrichtungen benötigt werden. Und auch die dazu verwendbaren Spritzpistolen sind in besonderer Weise auszubilden, da in diesen den dosiert zugeführten Komponenten das Treibmittel beizugeben ist, um das Aufschäumen zu bewirken. Die Herstellung eines PIR-Schaumes ist somit bisher nur mit besonderen grossbauenden Maschinen zu bewerkstelligen, die nicht überall, vor allem nicht auf jeder Baustelle einsetzbar sind. Auch sind die Investitionskosten dieser Geräte erheblich.

Es ist daher Aufgabe der Erfindung, ein Verfahren zur Herstellung eines PIR-Schaumes zu schaffen, mittels dem ohne apparativem Aufwand ein derartiger Schaum auf wirtschaftliche Weise herzustellen ist. Vor allem soll hierbei er-

./.

2

reicht werden, daß keine exakten Dosierungen der einzelnen reaktiven Komponenten beim Aufschäumen einzuhalten sind und daß der PIR-Schaum ohne weiteres auch an unterschiedliche Verwendungszwecke anzupassen ist. Außerdem soll das Aufschäumen ohne Schwierigkeiten nahezu überall vorgenommen werden können.

Gemäß der Erfindung wird dies dadurch erreicht, daß einem aus Polyol und Isocyanat gebildeten Präpolymer ein Treibmittel zugegeben wird, das einen Trimerisierungskatalysator enthält.

Das Polyol und Isocyanat sollte hierbei in dem Präpolymer in einem molaren Verhältnis von 1:3 und mehr miteinander gemischt sein, um sicherzustellen, daß eine PIR-Bildung eintritt.

Das Präpolymer kann ferner mit einem Schaumstabilisator, einem Flammschutzmittel u.ä. versehen sein.

Angebracht ist es hierbei des weiteren, 10 bis 90 Gewichtsteile Katalysator mit 90 Gewichtsteilen Treibmittel zu mischen, wobei das zuzugebende Treibmittel-Katalysator-Gemisch mindestens 1% Katalysator, bezogen auf das Präpolymer, enthält.

Sehr vorteilhaft ist es außerdem, daß das Raumgewicht des PIR-Schaumes in Abhängigkeit von dem Verhältnis des Präpolymers zu dem diesem zugeführten Treibmittel veränderbar ist. Dies wird in der Weise vorgenommen, daß dem Präpolymer mehr oder weniger Treibmittel zugegeben wird, so daß das Raumgewicht des PIR-Schaumes reduziert oder erhöht werden kann. Mittels eines in die Spritzpistole einzusetzenden Durchflußmengen-Meßgerätes ist dies auf einfache Weise zu bewerkstelligen,

./.

3

so daß z.B. unmittelbar beim Ausschäumen eines Gegenstandes das Raumgewicht des zu erzeugenden Schaumes leicht bestimmt werden kann.

Um jederzeit, zumindest aber bei Temperaturen über dem Gefrierpunkt nach dem erfindungsgemäßen Verfahren Schaum erzeugen zu können, sollte ein Treibmittel verwendet werden, dessen Druck bei der Verarbeitung größer als 1 bar ist. Außerdem sollte der Katalysator im Treibmittel lösbar sein.

Und um das Präpolymer ohne Pumpe auszubringen, sollte diesem ein Treibmittel beigegeben sein.

Eine Mischung zur Herstellung eines PIR-Schaumes besteht aus 100 Gewichtsanteilen Polyol, mind. 300 Gewichtsanteilen Isocyanat, gegebenenfalls angereichert mit einem Schaumstabilisator, einem Flammschutzmittel, einem Treibmittel u.ä. als Präpolymer unter Zugabe eines Treibmittels, das einen Trimerisierungskatalysator enthält, dessen Anteil mindestens 1 Gewichtsprozent des Präpolymers beträgt.

Das gemäß der Erfindung vorgesehene Verfahren zur Herstellung eines flammfesten PIR-Schaumes ist nicht nur äußerst einfach in der Handhabung, sondern es ermöglicht es auch, ohne maschinellen Aufwand in wirtschaftlicher Weise einen derartigen Schaum nahezu überall zu erzeugen, der außerdem dem jeweiligen Verwendungszweck leicht anzupassen ist. Einem aus Polyol und Isocyanat gebildeten Präpolymer, das in einem Vorratsbehälter gelagert wird, wird nämlich zum Aufschäumen in einer statischen oder dynamischen Mischvorrichtung lediglich ein Treibmittel, das einen Trimerisierungskatalysator enthält und ebenfalls vorgemischt ist, in veränderbarer Menge beigegeben. Für

./.

4

den Verarbeiter sind somit keine Geräte zur Dosierung erforderlich, vielmehr können das Präpolymer sowie das
Treibmittel mit Katalysator enthaltende Behältnisse unmittelbar an eine Spritzpistole angeschlossen werden.
Und es kann somit nahezu überall, insbesondere aber auf
Baustellen, indem die beider Behältnisse z.B. in einem
Traggestell mitgeführt werden, ohne Aufwand PIR-Schaum
erzeugt werden.

Durch die Zuführung des Treibmittels in der Mischvorrichtung
tritt aus dieser im Volumen fertiger Schaum aus, der in einer
Zeit von beispielsweise 5 bis 20 Minuten aushärtet. Mittels
des Trimerisierungskatalysators ist dessen Start- und Steigzeit beeinflussbar. Und um während des Ausschäumens einen
preiswerten PIR-Schaum mit einer hohen Wärmedämmung und
somit einem geringem Raumgewicht von z.B. 25 $kg/m^3$ zu erzeugen, ist dem Präpolymer lediglich eine entsprechend
grosse Menge Treibmittel zuzuführen. Bei der Herstellung
eines schweren Schaumes als Konstruktionswerkstoff, der
zur Befestigung von Bauteilen verwendet werden kann, ist dagegen der zuzuführende Treibmittelanteil z.B. mit Hilfe einer
Spritzpistole zu reduzieren, so daß das Raumgewicht bis zu
60 kg pro/$m^3$ erhöht wird. Das erfindungsgemäße Verfahren ermöglicht es somit, mit einfachen Mitteln einen vielseitig verwendbaren PIR-Schaum am Einsatzort herzustellen. Dabei ist des weiteren von Vorteil, daß dazu keine maschinellen Einrichtungen erforderlich sind, daß keine Reinigung der Mischvorrichtung, da
diese auf die Spritzpistole aufsetzbar ist und nach Gebrauch
weggeworfen werden kann, notwendig ist, und daß außerdem das
mit dem Katalysator versehene Treibmittel in unterschiedlichen
Gebinden, die, wie auch das Präpolymer, lagerstabil sind, vorgemischt werden kann.

./.

ſ

Die Erfindung wird durch die folgenden Beispiele näher erläutert, in denen alle Teile im Gewicht ausgedrückt sind.

Beispiel 1: Zur Präpolymerbildung werden

100 Teile Polyätherpolyol mit einer OH-Zahl von 150
380 Teile Isocyanat (MDI)
100 Teile Flammschutzmittel
 20 Teile Schaumstabilisator und
200 Teile Treibmittel

zusammengebracht. Zunächst werden hierbei das Polyätherpolyol, das Flammschutzmittel und der Schaumstabilisator vorgemischt und anschliessend wird dieses in das Isocyanat durch Rühren eingemischt. Dieses Präpolymer wird sodann  in eine Druckflasche eingefüllt und mit Treibmittel beaufschlagt.


In einer zweiten Druckflasche werden

 80 Teile Halogenisiertes Kohlenwasserstofftreibmittel und
 20 Teile Trimerisierungskatalysator

eingefüllt. Der zunächst eingebrachte Katalysator wird hierbei von dem Treibmittel beaufschlagt und in diesem durch Schütteln gelöst.

Werden das Präpolymer und das mit dem Trimerisierungskatalysator versehene Treibmittel in einer Mischvorrichtung zusammengebracht, entsteht ein PIR-Schaum.

6

Beispiel 2: Zur Präpolymerbildung werden

100 Teile Polyätherpolyol halogenisiert
mit einer OH-Zahl von 180

480 Teile Isocyanat (MDI)

30 Teile Schaumstabilisator und

20 Teile Treibmittel verwendet.

Hierbei werden das Polyätherpolyol und der
Schaumstabilisator vorgemischt, und sodann
wird das Polyätherpolyol-Stabilisator-Gemisch
in das Isocyanat durch Rühren eingemischt.
Alle Teile werden in eine Druckflasche eingefüllt und sodann wird das Präpolymer von dem
Treibmittel beaufschlagt, das durch Schütteln in diesem gelöst wird.

Das mit dem Trimerisierungskatalysator versehene Treibmittel
ist in gleicher Weise zusammengesetzt wie bei dem Beispiel 1.

A 8034  e-hb
6. Juli 1979

Guido Engelhardt
Patentanwalt
Ehlerstr. 3, ... ... 22667
D-7990 Friedrichshafen 1

Firma
durol GmbH & Co KG
Chemische Fabrik Lindau-Bodensee

899o Lindau/Bodensee

<div align="center">

P a t e n t a n s p r ü c h e :

</div>

1. Verfahren zur Herstellung eines PIR-Schaumes,

   d a d u r c h   g e k e n n z e i c h n e t ,

   daß einem aus Polyol und Isocyanat gebildeten Präpolymer
   ein Treibmittel zugegeben wird, das einen Trimerisierungskatalysator enthält.

2. Verfahren nach Anspruch 1,

   d a d u r c h   g e k e n n z e i c h n e t ,

   daß das Polyol und das Isocyanat in dem Präpolymer in einem
   molaren Verhältnis von 1:3 und mehr miteinander gemischt
   sind.

3. Verfahren nach Anspruch 1 oder 2,

   d a d u r c h   g e k e n n z e i c h n e t ,

   daß das Präpolymer mit einem Schaumstabilisator, einem
   Flammschutzmittel u./od. ä. versehen ist.

<div align="right">

./.

</div>

4. Verfahren nach einem der Ansprüche 1 bis 3,

d a d u r c h   g e k e n n z e i c h n e t ,

.daß 10 bis 90 Gewichtsteile Katalysator mit 90 Gewichtsteilen Treibmittel gemischt und daß  das zuzugebende Treibmittel-Katalysator-Gemisch mindestens
1% Katalysator, bezogen auf das Präpolymer, enthält.

5. Verfahren nach einem der Ansprüche 1 bis 4,

d a d u r c h   g e k e n n z e i c h n e t ,

daß das Raumgewicht des PIR-Schaumes in Abhängigkeit
von dem Verhältnis des Präpolymers zu dem diesem zugeführten Treibmittel veränderbar ist.

6. Verfahren nach einem der Ansprüche 1 bis 5,

d a d u r c h   g e k e n n z e i c h n e t ,

daß ein Treibmittel verwendet wird, dessen Druck bei
der Verarbeitung größer als 1 bar ist.

7. Verfahren nach einem der Ansprüche 1 bis 6,

d a d u r c h   g e k e n n z e i c h n e t ,

daß ein im Treibmittel lösbarer Katalysator verwendet
wird.

8. Verfahren nach einem der Ansprüche 1 bis 7,

d a d u r c h   g e k e n n z e i c h n e t ,

daß dem Präpolymer ein Treibmittel beigegeben ist.

9. Mischung zur Herstellung eines PIR-Schaumes, bestehend aus loo Gewichtsanteilen Polyol, mind. 300 Gewichtsanteilen Isocyanat, gegebenenfalls angereichert mit einem Schaumstabilisator, einem Flammschutzmittel, einem Treibmittel u.ä. als Präpolymer unter Zugabe eines Treibmittels, das einen Trimerisierungskatalysator enthält, dessen Anteil mindestens 1 Gewichtsprozent des Präpolymers beträgt.

A 8034  e-hb
6. Juli  1979

0023973

Europäisches Patentamt

**EUROPÄISCHER RECHERCHENBERICHT**

Nummer der Anmeldung

EP 80 10 4005

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 286 839 (BASF WYANDOTTE) | 1-4,9 |
| | * Seite 19, Patentanspruch 1; Seite 2, Zeilen 13-35; Seite 8, Zeilen 25-37; Seite 12, Beispiel 2, Zeilen 17-31; Seite 13, Tabelle 2 * | |
| | -- | |
| | FR - A - 2 017 819 (BAYER) | 1-4,9 |
| | * Seite 13, Patentanspruch; Seite 3, Zeilen 21-25; Seite 5, Zeilen 16-21, 28-30; Seite 9, Beispiel 1 * | |
| | -- | |
| | FR - A - 2 037 269 (I.C.I.) | 1-4,9 |
| | * Seite 21, Patentanspruch 1; Seite 22, Patentanspruch 8; Seite 3, Zeilen 11-18; Seite 10, Zeilen 30-36; Seite 12, Zeilen 9-34; Seite 13, Zeilen 1-21 * | |
| | -- | |
| | FR - A - 1 441 565 (GENERAL TIRE & RUBBER) | 1,2 |
| | * Seiten 11 und 12; Zusammenfassung Punkte 1II und 5; Seite 4, rechte Spalte, Absatz 3; Seite 7, Beispiel 2 * | |
| | -- | |
| | FR - A - 1 525 413 (I.C.I.) | 6 |
| | * Seite 7, Zusammenfassung Punkte $A_1$, $A_9$ bis $A_{14}$ und B; Seite 2, linke Spalte, Absatz 3; Seite 4, linke Spalte, ./. | |

**KLASSIFIKATION DER ANMELDUNG (Int Cl.³)**

C 08 G 18/79
        18/10
        18/14

**RECHERCHIERTE SACHGEBIETE (Int. Cl.³)**

C 08 G 18/79
        18/02
        18/14
        18/10
C 08 J   9/14

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-10-1980 | V. PUYMBROECK |

EPA form 1503.1   06.78

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| | Absatz 2 *  --- | |
| A | US - A - 2 993 870 (J. BURKUS)  * Spalten 6 bis 8, Patentansprüche 7,11 und 12; Spalte 5, Beispiel 12 *  ------- | 1,2 |

**KLASSIFIKATION DER ANMELDUNG (Int. Cl.³)**

**RECHERCHIERTE SACHGEBIETE (Int Cl.³)**

EPA Form 1503.2  06.78